# EUROPEAN PATENT APPLICATION

(11) **EP 3 786 126 A1**
(43) Date of publication of application: **03.03.2021**
(21) Application number: 19791908.7
(22) Date of filing: 13.03.2019
(51) Int. Cl.: C03C 27/06, E06B 3/677

(54) **GLASS PANEL UNIT AND METHOD FOR MANUFACTURING GLASS PANEL UNIT**

(30) Priority: 26.04.2018 JP 2018085837
(71) Applicant: Panasonic Intellectual Property Management Co., Ltd., Osaka-shi, Osaka 540-6207 (JP)
(72) Inventor: NONAKA, Masataka, Osaka-shi, OSAKA 540-6207 (JP); URIU, Eiichi, Osaka-shi, OSAKA 540-6207 (JP); HASEGAWA, Kazuya, Osaka-shi, OSAKA 540-6207 (JP); ISHIBASHI, Tasuku, Osaka-shi, OSAKA 540-6207 (JP); ABE, Hiroyuki, Osaka-shi, OSAKA 540-6207 (JP); SHIMIZU, Takeshi, Osaka-shi, OSAKA 540-6207 (JP); ISHIKAWA, Haruhiko, Osaka-shi, OSAKA 540-6207 (JP)
(74) Representative: Müller-Boré & Partner Patentanwälte PartG mbB
(86) International application number: PCT/JP2019/010406
(87) International publication number: WO 2019/208003

(57) **Abstract**

The present disclosure provides a glass panel unit in which the activation of a gas adsorbent is facilitated and the occurrence of damage at the activation of the gas adsorbent is reduced. A glass panel unit (100) includes: a first glass pane (1); a second glass pane (2) disposed to face the first glass pane (1); a frame (41) disposed between the first glass pane (1) and the second glass pane (2) and hermetically bonding a first peripheral portion (13) of the first glass pane (1) and a second peripheral portion (23) of the second glass pane (2) together, the first peripheral portion (13) extending along an outer periphery of the first glass pane (1), the second peripheral portion (23) extending along an outer periphery of the second glass pane (2); a vacuum space (52) surrounded by the first glass pane (1), the second glass pane (2), and the frame (41); a gas adsorbent (44) disposed in the vacuum space (52); and a thermal insulation layer (48) disposed between the gas adsorbent (44) and the second glass pane (2).

## Description

### Technical Field

The present disclosure relates to glass panel units and methods for manufacturing the glass panel units. Specifically, the present disclosure relates to a glass panel unit suitably available to a windowpane or the like and a method for manufacturing the glass panel unit.

### Background Art

Conventionally, a gas adsorbent is activated in a vacuum space of a glass panel unit such that gas present in the vacuum space is adsorbed on the gas adsorbent.

For example, Patent Literature 1 discloses vacuum insulated glazing. The vacuum insulated glazing is provided with a getter as a gas adsorbent disposed in a vacuum space and on a sheet of glass of the vacuum insulated glazing. The getter is activated by being locally heated such that gas present in the vacuum space is adsorbed on the getter.

In Patent Literature 1, since the getter is disposed on the sheet of glass, the sheet of glass may be damaged when the getter is activated, that is, when the getter is locally heated. Patent Literature 1 also discloses that while the sheet of glass is cooled by being blown with air, the getter is activated by being locally heated. However, in this case, a device for blowing the sheet of glass with air is required, and therefore, a step of activating the getter may be complicated.

### Citation List

### Patent Literature

Patent Literature 1: JP 2003-212610 A

### Summary of Invention

It is an object of the present disclosure to provide a glass panel unit and a method for manufacturing the glass panel unit which facilitate activation of a gas adsorbent and reduces the occurrence of damage at the activation of the gas adsorbent.

One aspect according to the present disclosure is a glass panel unit including a first glass pane, a second glass pane, a frame, a vacuum space, a gas adsorbent, and a thermal insulation layer. The second glass pane is disposed to face the first glass pane. The frame is disposed between the first glass pane and the second glass pane and hermetically bonds a first peripheral portion of the first glass pane and a second peripheral portion of the second glass pane together. The first peripheral portion extends along an outer periphery of the first glass pane. The second peripheral portion extends along an outer periphery of the second glass pane. The vacuum space is surrounded by the first glass pane, the second glass pane, and the frame. The gas adsorbent is disposed in the vacuum space. The thermal insulation layer is disposed between the gas adsorbent and the second glass pane.

Another aspect according to the present disclosure is a method for manufacturing a glass panel unit, and the method includes a preparation step, a melting step, an evacuation step, and an activation step. The preparation step includes preparing an assembled product. The assembled product includes a first glass pane, a second glass pane, a bonding material having a frame shape, an internal space, a gas adsorbent, and a thermal insulation layer. The second glass pane is disposed to face the first glass pane. The bonding material having the frame shape is disposed between a first peripheral portion of the first glass pane and a second peripheral portion of the second glass pane. The first peripheral portion extends along an outer periphery of the first glass pane. The second peripheral portion extends along an outer periphery of the second glass pane. The internal space is surrounded by the first glass pane, the second glass pane, and the bonding material having the frame shape. The gas adsorbent is disposed in the internal space. The thermal insulation layer is disposed between the gas adsorbent and the second glass pane. The melting step is a step of melting the bonding material having the frame shape to hermetically bond the first glass pane and the second glass pane together. The evacuation step is a step of evacuating the internal space via an evacuation port to create a vacuum space. The evacuation port is communicated with the internal space. The activation step is a step of activating the gas adsorbent by locally heating the gas adsorbent.

The present disclosure facilitates the activation of the gas adsorbent and reduces the occurrence of damage at the activation of the gas adsorbent.

### Brief Description of Drawings

FIG. 1 is a perspective view illustrating one example of a glass panel unit according to one embodiment;
FIG. 2 is a plan view illustrating the glass panel unit;
FIG. 3 is a sectional view illustrating the glass panel unit taken along line A-A of FIG. 2;
FIG. 4 is a perspective view illustrating one example of a state in a preparation step of a manufacturing method of the glass panel unit according to the one embodiment;
FIG. 5 is a view illustrating one example of the manufacturing method;
FIG. 6 is a plan view illustrating a work in progress in the manufacturing method;
FIG. 7 is a conceptual view illustrating an evacuation step of the manufacturing method;
FIG. 8 is a conceptual view illustrating a sealing step of the manufacturing method; and
FIG. 9 is a conceptual view illustrating an activation step of the manufacturing method.

### Description of Embodiments

Embodiments of the present disclosure will be described below.

### <Glass Panel Unit>

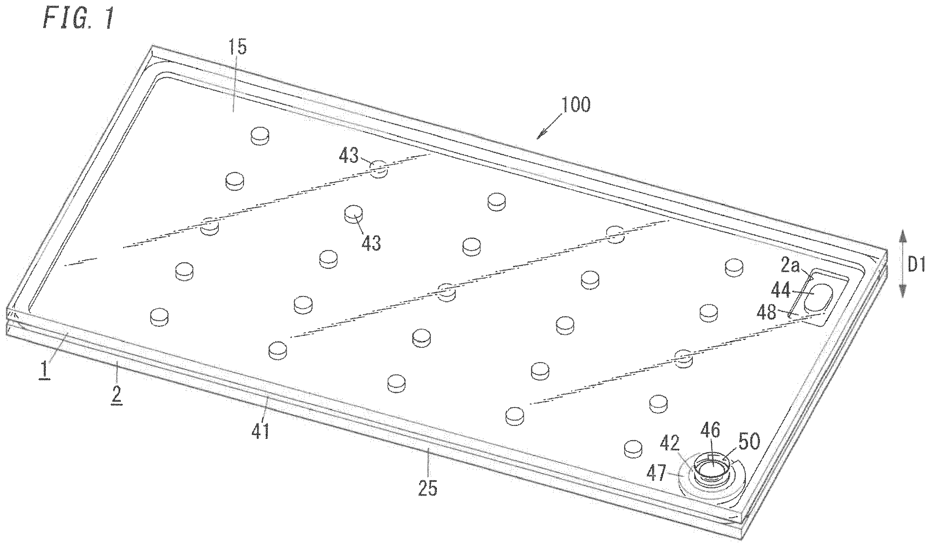

First, a glass panel unit 100 according to one embodiment will be described with reference to FIGS. 1 to 3. Each of FIGS. 1 to 3 schematically shows components of the glass panel unit 100. That is to say, the dimensions and shapes of these components illustrated on those drawings are different from actual ones.

The glass panel unit 100 includes a first glass pane 1, a second glass pane 2, a frame 41, a vacuum space 52, a pore sealing material 42, a dam 47, a plurality of spacers 43, a gas adsorbent 44, and a thermal insulation layer 48.

The first glass pane 1 faces the second glass pane 2 in a thickness direction D1 of the glass panel unit 100. The first glass pane 1 is disposed to be parallel to the second glass pane 2. Moreover, the first glass pane 1 is apart from the second glass pane 2 along the thickness direction D1. The frame 41 and the vacuum space 52 are located between the first glass pane 1 and the second glass pane 2. The dam 47, the plurality of spacers 43, the gas adsorbent 44, and the thermal insulation layer 48 are located in the vacuum space 52.

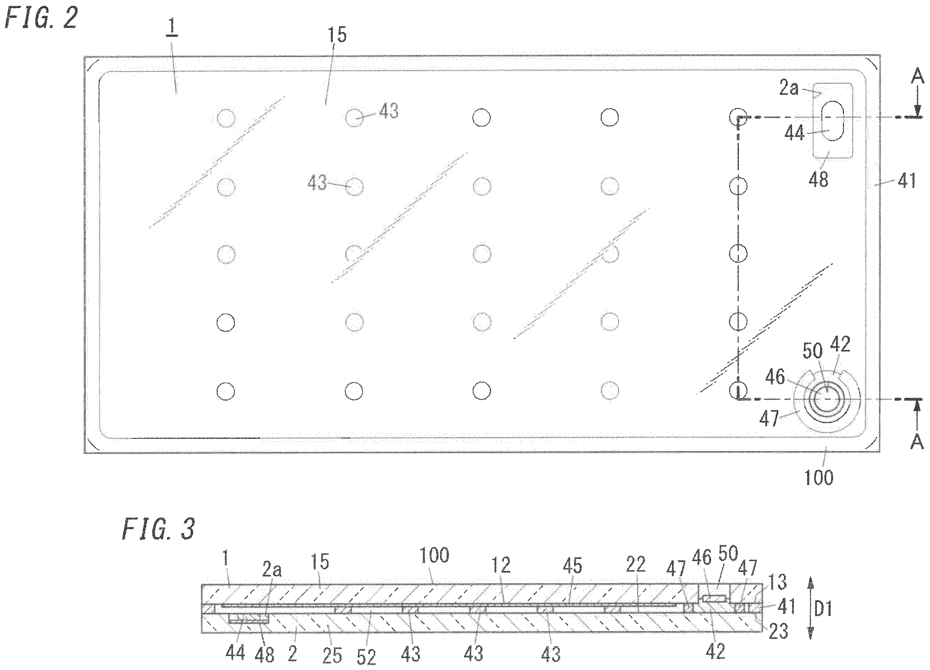

The first glass pane 1 includes a glass panel (first glass panel) 15 as a body and a low-emissivity film 45 stacked on the glass panel 15 (e.g., see FIG. 3).

The glass panel 15 is a light-transmitting panel made of glass. Examples of materials for the glass panel 15 include soda-lime glass, high strain-point glass, chemically tempered glass, no-alkali glass, quartz glass, Neoceram, and physically tempered glass.

The glass panel 15 includes a counter surface (first counter surface) 12 facing the second glass pane 2. The low-emissivity film 45 is stacked on most part of the counter surface 12. Specifically, when the first glass pane 1 is viewed in plan, the low-emissivity film 45 is stacked on the counter surface 12 except for peripheral locations of the frame 41, the pore sealing material 42, and the dam 47. The low-emissivity film 45 is a film containing a metal, such as silver, with low emissivity and has a function of reducing heat transfer due to radiation.

The second glass pane 2 has a counter surface (second counter surface) 22 facing the first glass pane 1. The second glass pane 2 includes a glass panel (second glass panel) 25 as a body. Examples of materials for the glass panel 25 include soda-lime glass, high strain-point glass, chemically tempered glass, no-alkali glass, quartz glass, Neoceram, and physically tempered glass. The second glass pane 2 may consist of the glass panel 25.

The thermal insulation layer 48 and the gas adsorbent 44 are stacked in this order on the second glass pane 2. In this case, the thermal insulation layer 48 is disposed between the second glass pane 2 and the gas adsorbent 44. Thus, heat generated at the gas adsorbent 44 at the activation of the gas adsorbent 44 in the vacuum space 52 is suppressed by the thermal insulation layer 48 from being transmitted to the second glass pane 2. Therefore, cooling of the second glass pane 2 at the time of activation of the gas adsorbent 44 may be omitted, and additionally, at the activation of the gas adsorbent 44, the glass panel unit 100, specifically, the second glass pane 2 is less likely to be damaged. Omitting the cooling of the second glass pane 2 facilitates the activation of the gas adsorbent 44. Moreover, the thermal insulation layer 48 and the gas adsorbent 44 are disposed at locations where the spacers 43 are not disposed.

The second glass pane 2 has a bottomed recess 2a. The recess 2a is disposed in the vacuum space 52. The recess 2a is formed such that part of the counter surface 22 is recessed with respect to the vacuum space 52 toward an opposite side from the first glass pane 1 (e.g., see FIG. 3). The recess 2a is provided at a location where the spacer 43 is not provided. The thermal insulation layer 48 and the gas adsorbent 44 are stacked in this order in the recess 2a. Specifically, the thermal insulation layer 48 and the gas adsorbent 44 are stacked in this order on a bottom surface of the recess 2a. Also when the gas adsorbent 44 and the thermal insulation layer 48 are disposed in the recess 2a, the thermal insulation layer 48 suppresses the heat generated at the gas adsorbent 44 at the activation of the gas adsorbent 44 from being transmitted to the second glass pane 2. Therefore, the cooling of the second glass pane 2 at the time of activation of the gas adsorbent 44 may be omitted, and additionally, at the activation of the gas adsorbent 44, the second glass pane 2 is less likely to be damaged. Omitting the cooling of the second glass pane 2 facilitates the activation of the gas adsorbent 44.

The frame 41 hermetically bonds a first peripheral portion 13 of the first glass pane 1 and a second peripheral portion 23 of the second glass pane 2 together. The first peripheral portion 13 is a frame-shaped portion along an outer periphery of the first glass pane 1. The second peripheral portion 23 is a frame-shaped portion along an outer periphery of the second glass pane 2.

The frame 41 is formed of a bonding material having a frame shape. Specifically, the frame 41 is a member obtained by melting and then curing the bonding material having the frame shape. The bonding material contains glass frit having a prescribed softening point. The bonding material consists of, for example, glass frit. Any glass frit may be adopted as long as it bonds the first glass panel 1 and the second glass panel 2 together by being melted and then cured. The glass frit is, for example, low-melting-point glass frit. An example of the low-melting-point glass frit is V-Te-Ag-based glass frit.

The vacuum space 52 is surrounded by the first glass pane 1, the second glass pane 2, and the frame 41. In this case, the pore sealing material 42 seals at least an evacuation port 50 which will be described later. The vacuum space 52 has a degree of vacuum of lower than or equal to a prescribed value. The degree of vacuum of the vacuum space 52 is not particularly limited, as long as it suppresses the thermal insulation properties of the glass panel unit 100 from being degraded. The degree of vacuum of the vacuum space 52 is, for example, lower than or equal to 0.1 Pa.

The plurality of spacers 43 are dispersed so as to be spaced apart from each other. Each of the spacers 43 is disposed between the first glass pane 1 and the second glass pane 2. That is, each of the spacers 43 is in contact with the first glass pane 1 and the second glass pane 2.

The plurality of spacers 43 are located in the vacuum space 52 surrounded by the frame 41 and functions to maintain a prescribed distance between the first glass pane 1 and the second glass pane 2. All or some of the spacers 43 are preferably made of a resin such as polyimide.

Adopting the resin as a material for the spacers 43 provides the advantage that the thermal conductivity of the spacers 43 is suppressed. Moreover, adopting polyimide as a material for the spacers 43 provides the advantage that heat resistance is excellent (the shape is easily maintained in the heating process).

The gas adsorbent 44 contains a metal getter material. In this case, activation of the gas adsorbent 44 allows the gas adsorbent 44 to adsorb gas in the vacuum space 52 and thus makes the quality of the vacuum space 52 less susceptible to degradation. This makes the thermal insulation properties of the glass panel unit 100 less susceptible to degradation.

The metal getter material is made of metal having a metal surface on which gas molecules are chemically adsorbable. Examples of the metal getter material include, a zirconium-based getter material such as a Zr-Al-based getter material and Zr-V-Fe, and a titanium-based getter material.

Since the gas adsorbent 44 contains the metal getter material, the metal getter material can adsorb gas present in the vacuum space 52. Examples of the gas in the vacuum space 52 include water vapor, nitrogen, oxygen, hydrogen, and carbon dioxide.

Moreover, before the metal getter material is activated, gas molecules may be adsorbed (chemically adsorbed) on the metal surface of the metal getter material. Thus, also when the gas molecules are adsorbed on the metal surface of the metal getter material, the gas molecules can be scattered in the interior of the metal getter material at the activation of the metal getter material.

The thermal insulation layer 48 is a layer that insulates heat generated at the gas adsorbent 44 at the activation of the gas adsorbent 44. The thermal insulation layer 48 is in contact with the second glass pane 2 and the gas adsorbent 44. The planar shape of the thermal insulation layer 48 is preferably larger than that of the gas adsorbent 44. In this case, the gas adsorbent 44 is less likely to come into contact with the second glass pane 2. Thus, the heat generated at the gas adsorbent 44 at the activation of the gas adsorbent 44 is suppressed by the thermal insulation layer 48 from being transmitted to the second glass pane 2. Therefore, the cooling of the second glass pane 2 at the time of activation of the gas adsorbent 44 may be omitted, and additionally, at the activation of the gas adsorbent 44, the second glass pane 2 is less likely to be damaged. Omitting the cooling of the second glass pane 2 facilitates the activation of the gas adsorbent 44.

Moreover, the thermal insulation layer 48 has a higher softening point than at least the second glass pane 2. Thus, the thermal insulation layer 48 is heat resistant. Examples of configuration materials of the thermal insulation layer 48 include hollow silica particles, heat-resistant particles such as ceramics particles, and a porous plate such as a ceramics plate. Of these configuration materials, one material or two or more materials may be used.

When the thermal insulation layer 48 includes the heat-resistant particles, the heat-resistant particles are deposited on the second glass pane 2. When the thermal insulation layer 48 includes a porous plate, the porous plate is disposed on the second glass pane 2. When the thermal insulation layer 48 includes the heat-resistant particles and the porous plate, the heat-resistant particles are deposited on the second glass pane 2 or the porous plate. Moreover, when the heat-resistant particles are deposited on the porous plate, a layer including heat-resistant particles may be disposed between the porous plate and the second glass pane 2.

The first glass pane 1 has the evacuation port 50. The evacuation port 50 is a pore penetrating the first glass pane 1 in the thickness direction D1 of the first glass pane 1. Moreover, the evacuation port 50 will be used to exhaust the gas in a step (i.e., an evacuation step to be described later) during the manufacturing process of the glass panel unit 100.

In the glass panel unit 100, the evacuation port 50 is hermetically sealed with the pore sealing material 42. The pore sealing material 42 is made of, for example, glass frit.

The dam 47 has an annular shape part of which is cut out (e.g., C-shape). The dam 47 is disposed to extend along a peripheral edge of the evacuation port 50 in plan view. Thus, the dam 47 can confine the pore sealing material 42 in a space on an inner circumferential side thereof. This enables the pore sealing material 42 to seal the evacuation port 50. The dam 47 is preferably formed from the same material as the frame 41.

A plate 46 is disposed in the evacuation port 50 and is a member used in the process (a sealing step which will be described later) of manufacturing the glass panel unit 100. The evacuation port 50 may be further filled with a resin covering the plate 46.

The glass panel unit 100 of the above description has excellent thermal insulation properties and easily handled. Thus, the glass panel unit 100 is suitably used for a windowpane. Moreover, for example, disposing the glass panel unit 100 on a door portion of a refrigerator or a freezer enables the state of the interior of the refrigerator or the freezer to be checked, and the function of the refrigerator or the freezer is not inhibited by taking advantage of the high thermal insulation properties. As this example, domestic or business application of the glass panel unit can be expected.

### <Method for Manufacturing Glass Panel Unit>

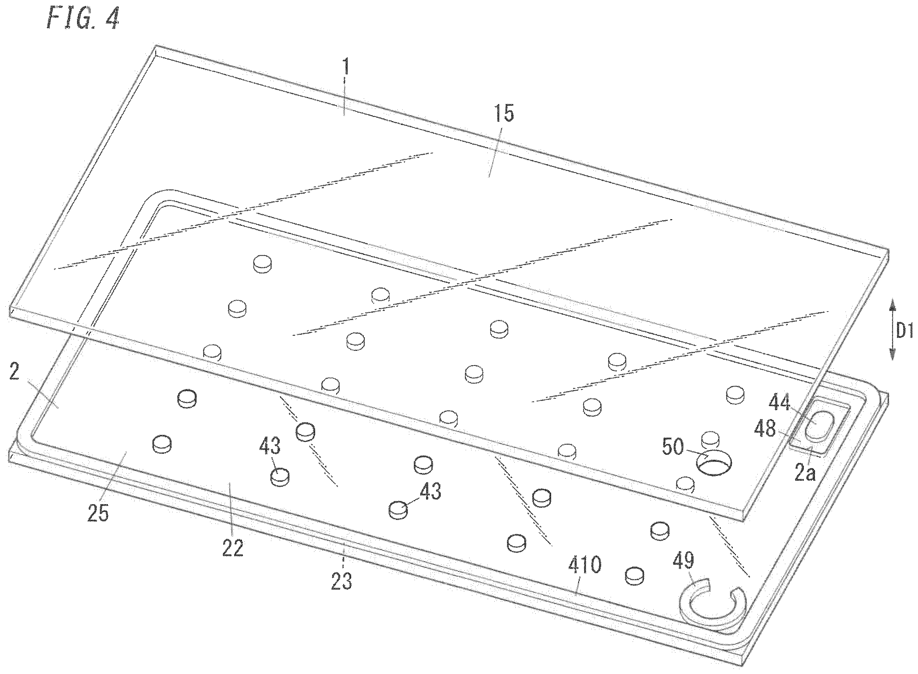

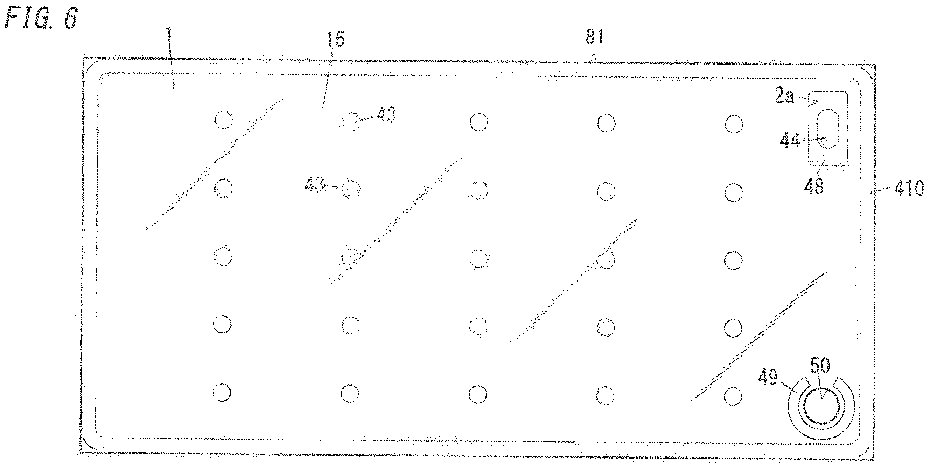

Next, a manufacturing method (M) of a glass panel unit according to the one embodiment will be described with reference to FIGS. 4 to 9. The manufacturing method (M) is a method for manufacturing the glass panel unit 100. Thus, the present embodiment may refer to the description of the glass panel unit 100.

The manufacturing method (M) includes a preparation step, a melting step, an evacuation step, a sealing step, and an activation step.

The preparation step is a step of preparing an assembled product 81.

The assembled product 81 includes the first glass pane 1, the second glass pane 2, a bonding material 410 having a frame shape, an internal space 510, a dam 49, the plurality of spacers 43, the gas adsorbent 44, and the thermal insulation layer 48. The assembled product 81 is an intermediate product when the glass panel unit 100 is manufactured. The assembled product 81 has basically the same structure as the glass panel unit 100. Specifically, in the assembled product 81, the internal space 510 is not evacuated, the bonding material 410 having the frame shape and the dam 49 are not melted and cured, and the evacuation port 50 is not sealed.

In the preparation step, the first glass pane 1 and the second glass pane 2 are prepared at first. The first glass pane 1 has the evacuation port 50. The second glass pane 2 has a bottomed recess 2a. In the assembled product 81, the recess 2a is formed to be disposed in the internal space 510 surrounded by the first glass pane 1, the second glass pane 2, and the bonding material 410 having the frame shape. Moreover, the recess 2a is formed such that part of the counter surface 22 is recessed with respect to the internal space 510 toward an opposite side from the first glass pane 1.

The preparation step includes a spacer arrangement step, a gas adsorbent disposition step, a bonding material disposition step, and a dam disposition step. The spacer arrangement step, the gas adsorbent disposition step, the bonding material disposition step, and the dam disposition step are performed after the first glass pane 1 and the second glass pane 2 are prepared.

The spacer arrangement step is a step of arranging the plurality of spacers 43. As illustrated in FIG. 4, the spacers 43 are disposed on one surface (the counter surface) 22 of the second glass pane 2 at intervals.

The gas adsorbent disposition step is a step of disposing the gas adsorbent 44 and the thermal insulation layer 48 on the second glass pane 2. In the gas adsorbent disposition step, the gas adsorbent 44 and the thermal insulation layer 48 are disposed in this order on the second glass pane 2. Specifically, the gas adsorbent 44 and the thermal insulation layer 48 are disposed in this order on a bottom surface of the recess 2a. The thermal insulation layer 48 is disposed between the second glass pane 2 and the gas adsorbent 44.

Examples of configuration materials of the thermal insulation layer 48 include hollow silica particles, heat-resistant particles such as ceramics particles, and a porous plate such as a ceramics plate. Of these configuration materials, one material or two or more materials may be used.

When the thermal insulation layer 48 includes the heat-resistant particles, the heat-resistant particles are deposited on the second glass pane 2. When the thermal insulation layer 48 includes a porous plate, the porous plate is disposed on the second glass pane 2. When the thermal insulation layer 48 includes the heat-resistant particles and the porous plate, the heat-resistant particles are deposited on the second glass pane 2 or the porous plate. Moreover, when the heat-resistant particles are deposited on the porous plate, a layer including heat-resistant particles may be disposed between the porous plate and the second glass pane 2.

In the present embodiment, one of the spacer arrangement step and the gas adsorbent disposition step may be performed at first, or both of the spacer arrangement step and the gas adsorbent disposition step may be concurrently performed.

The bonding material disposition step includes disposing the bonding material 410 having the frame shape on the second peripheral portion 23 as illustrated in FIG. 4.

The dam disposition step includes disposing the dam 49 having an annular shape part of which is cut out (e.g., C-shape) on the second glass pane 2 to extend along the peripheral edge of the evacuation port 50. The dam 49 is preferably made of the same material as the bonding material 410. The dam 49 is an intermediate product for forming the dam 47.

The bonding material disposition step and the dam disposition step may be performed before the spacer arrangement step or after the spacer arrangement step. Moreover, the bonding material disposition step and the dam disposition step may be performed before the gas adsorbent disposition step or after the gas adsorbent disposition step.

The preparation step includes disposing the first glass pane 1 to face the second glass pane 2 after the spacer arrangement step, the gas adsorbent disposition step, the bonding material disposition step, and the dam disposition step. In this case, the first glass pane 1 is disposed such that the low-emissivity film 45 faces the second glass pane 2. Thus, the internal space 510 surrounded by the first glass pane 1, the second glass pane 2, and the bonding material 410 having the frame shape is formed.

In the manufacturing method (M), the melting step, the evacuation step, and the sealing step are performed after the preparation step.

The melting step is a step of melting the bonding material 410 by heat such that the bonding material 410 is hermetically bonded to the first glass pane 1 and the second glass pane 2. During the melting step, the glass frit in the bonding material 410 is melted. Thus, the bonding material 410 thus melted is bonded to the first glass pane 1 and the second glass pane 2.

Moreover, the melting step includes melting the glass frit in the dam 49 by heat. Thus, the dam 49 thus melted is bonded to the first glass pane 1 and the second glass pane 2.

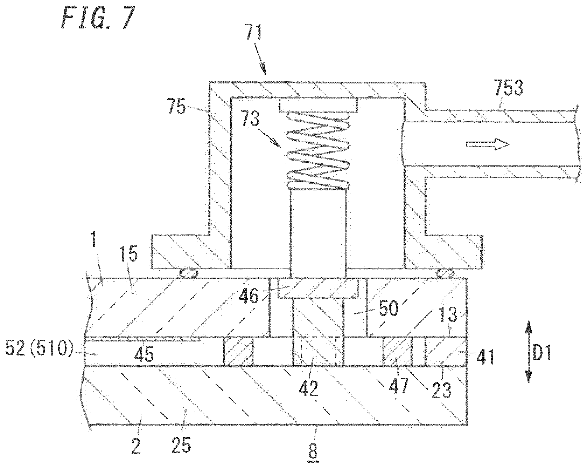

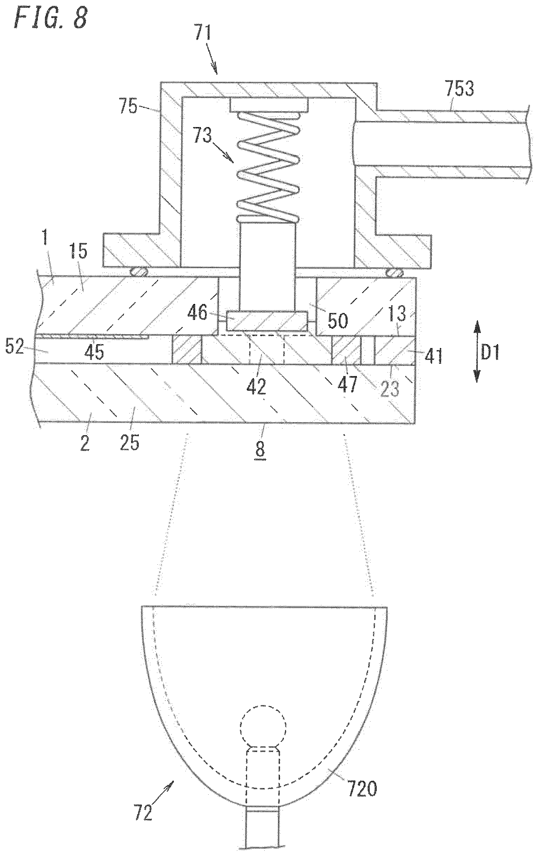

In the present embodiment, the assembled product 81 is heated in the melting step, thereby providing a work in progress 8. The work in progress 8 is an intermediate product for manufacturing the glass panel unit 100. That is, in the manufacturing method (M), the work in progress 8 is an item obtained in the course of manufacturing the glass panel unit 100 from the assembled product 81. The work in progress 8 basically has the same structure as the assembled product 81. Specifically, in the case of the work in progress 8 as illustrated in FIG. 7, the internal space 510 is in the course of evacuation, and the evacuation port 50 is not sealed. Moreover, in the case of the work in progress 8 as illustrated in FIG. 8, the gas adsorbent 44 is not activated.

To perform the melting step, the temperature (melting temperature) Tm in the melting step is set to a temperature higher than the softening point of the glass frit. The melting temperature Tm is, for example, 300°C.

After the glass frit is melted, the evacuation step and the sealing step are performed.

The evacuation step is a step of evacuating the internal space 510 via the evacuation port 50 to create the vacuum space 52. The evacuation step is performed, for example, such that the degree of vacuum of the vacuum space 52 is 0.1 Pa or lower.

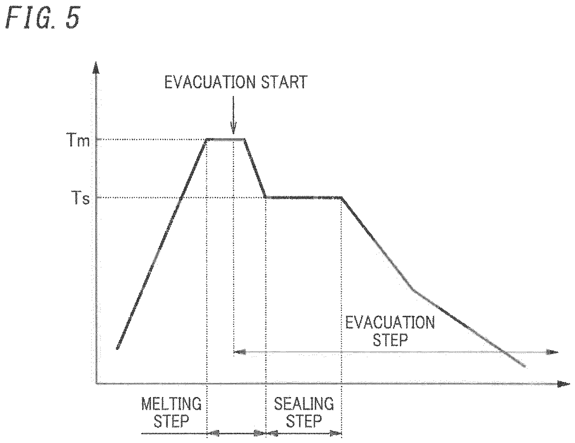

Moreover, when the glass frit in the bonding material 410 and the dam 49 is melted, the evacuation step may be started during the melting step (e.g., see FIG. 5). Alternatively, the evacuation step may be started while the work in progress 8 is cooled from the melting temperature Tm to a temperature (sealing temperature) Ts in the sealing step. While the work in progress 8 is cooled from the melting temperature Tm to the sealing temperature Ts, the bonding material 410, which has been melted, cures and becomes the frame 41, and the dam 49, which has been melted, cures and becomes the dam 47.

In the manufacturing method (M), the sealing step is performed after the vacuum space 52 is created. In this case, to keep the degree of vacuum of the vacuum space 52, the sealing step is performed in the course of the evacuation step. Here, the sealing step is a step of sealing the evacuation port 50 with the pore sealing material 42.

The evacuation step and the sealing step according to the present embodiment are performed with a device as illustrated in FIGS. 7 and 8. The device includes an evacuation mechanism 71, a heating mechanism 72, and a pressing mechanism 73.

The evacuation mechanism 71 includes an evacuation head 75 to be pressed against the work in progress 8 and a connector 753 connected to the evacuation head 75. The evacuation mechanism 71 is configured to evacuate, through the evacuation port 50, the internal space 510 created in the work in progress 8 and maintain the evacuated state there.

The evacuation head 75 is hermetically pressed against a portion of the first glass pane 1, the portion surrounding the opening of the evacuation port 50. Air in the evacuation head 75 is sucked (see the void arrow in FIG. 7) through the connector 753, and thereby, the internal space 510 is evacuated through the evacuation port 50.

The pressing mechanism 73 is provided to the evacuation head 75. The pressing mechanism 73 is configured to press, in a state where the vacuum space 52 is maintained by the evacuation mechanism 71, the pore sealing material 42 inserted into the evacuation port 50 toward the second glass pane 2.

During the evacuation step, the pore sealing material 42 and the plate 46 each having a diameter smaller than the diameter of the evacuation port 50 are inserted into the evacuation port 50 of the work in progress 8 (see FIG. 8). The plate 46 is disposed between the pore sealing material 42 and the pressing mechanism 73. In this state the pore sealing material 42 and the plate 46 are elastically pushed by the pressing mechanism 73 toward the second glass pane 2.

The pore sealing material 42 is a solid sealing material formed from, for example, glass frit. The pore sealing material 42 has a block shape. Alternatively, it is also preferable that the pore sealing material 42 has a vertically penetrating tubular shape.

Then, the heating mechanism 72 is activated to perform the sealing step. The heating mechanism 72 is disposed on an opposite side of the work in progress 8 from the evacuation head 75 (e.g., see FIG. 8). The heating mechanism 72 is configured to heat, in a non-contact manner, the pore sealing material 42 inserted in the evacuation port 50. In this case, while the temperature of the work in progress 8 is maintained at the sealing temperature Ts, the heating mechanism 72 heats the pore sealing material 42. The sealing temperature Ts is, for example, 250°C.

The heating mechanism 72 includes an irradiator 720. The irradiator 720 is configured to irradiate the pore sealing material 42 inserted in the evacuation port 50 with an infrared ray (a near infrared ray) through the second glass pane 2 to heat the pore sealing material 42.

During the sealing step, both of the heating mechanism 72 and the pressing mechanism 73 are activated, thereby sealing the evacuation port 50 with the pore sealing material 42 while the vacuum space 52 is maintained. In this case, the pore sealing material 42 is melted once, and the pore sealing material 42 thus melted is reserved in a space on an inner circumferential side of the dam 47. The pore sealing material 42, which has been melted, then cures, thereby sealing the evacuation port 50.

That is, in the sealing step, the heating mechanism 72 heats the pore sealing material 42 to melt the pore sealing material 42, and the pressing mechanism 73 exerts biasing force via the plate 46 to press the pore sealing material 42 toward the second glass pane 2. The pore sealing material 42 is deformed in the vacuum space 52 to come into contact with the inner peripheral surface of the dam 47. A cut-off formed in the dam 47 is sealed with the pore sealing material 42 thus deformed.

Thus, the evacuation port 50 is sealed with the pore sealing material 42. Sealing the evacuation port 50 enables the vacuum space 52 to be maintained also when the evacuation head 75 is removed. To remove the evacuation head 75, the pore sealing material 42 melted is cured by removing heat. After the evacuation port 50 is sealed with the pore sealing material 42, the evacuation step is stopped.

In the manufacturing method (M), the activation step is performed after the evacuation step and the sealing step.

The activation step is a step of activating the gas adsorbent 44 by locally heating the gas adsorbent 44. During the activation step, the temperature of the entirety of the work in progress 8 may be about a room temperature.

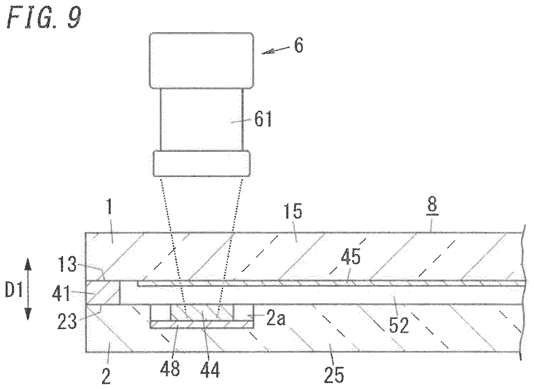

In the activation step, the gas adsorbent 44 disposed in the vacuum space 52 is locally heated by the local heating mechanism 6 shown in FIG. 9 until the temperature of the gas adsorbent 44 reaches a prescribed activation temperature. The local heating mechanism 6 is disposed on an opposite side of the gas adsorbent 44 from the second glass pane 2 in the thickness direction D1 and on an outer side of the first glass pane 1.

The activation temperature of the gas adsorbent 44 is arbitrarily set depending on the kinds of the metal getter material. The activation temperature is, for example, a temperature higher than the melting temperature Tm. In this case, the melting step can be performed while the gas adsorbent 44 is less likely to be activated. That is, during the melting step, the gas adsorbent 44 is less likely to be activated. Moreover, during the activation step, the gas adsorbent 44 is locally heated, and therefore, the frame 41 and the dam 47 are not remelted.

The local heating mechanism 6 includes an irradiator 61 configured to emit a laser beam. The irradiator 61 is configured to irradiate the gas adsorbent 44 with the laser beam through the first glass pane 1. Thus, the gas adsorbent 44 is heated in a non-contact manner. In this case, the gas adsorbent 44 is locally heated, that is, irradiated with the laser beam, without letting the laser beam pass through the thermal insulation layer 48, and therefore, a heat time of the gas adsorbent 44 is reduced. Thus, the work efficiency for activating the gas adsorbent 44 is improved.

Since the gas adsorbent 44 contains the metal getter material, activating the metal getter material enables the metal getter material to adsorb gas in the vacuum space 52. Examples of the gas in the vacuum space 52 include water vapor, nitrogen, oxygen, hydrogen, and carbon dioxide.

In particular, since the thermal insulation layer 48 is disposed between the gas adsorbent 44 and the second glass pane 2, the thermal insulation layer 48 makes heat generated at the gas adsorbent 44 during the activation step less likely to be transmitted to the second glass pane 2. Therefore, the cooling of the second glass pane 2 at the time of activation of the gas adsorbent 44 may be omitted, and additionally, at the activation of the gas adsorbent 44, the second glass pane 2 is less likely to be damaged. Omitting the cooling of the second glass pane 2 facilitates the activation of the gas adsorbent 44.

Moreover, when the gas adsorbent 44 contains a tablet-type metal getter material, the tablet-type metal getter material is activated by induction heating. Specifically, the tablet-type metal getter material is induction heated by the laser beam from the irradiator 61. The induction heating of such a tablet-type metal getter material locally heats the gas adsorbent 44. When the tablet-type metal getter material is induction heated, the irradiator 61 may radiate the laser beam to the gas adsorbent 44 through the first glass pane 1 or to the gas adsorbent 44 through the second glass pane 2. In this case, the local heating mechanism 6 is disposed on an opposite side of the gas adsorbent 44 from the second glass pane 2 in the thickness direction D1 and on an outer side of the first glass pane 1. Alternatively, the local heating mechanism 6 is disposed on an opposite side of the gas adsorbent 44 from the first glass pane 1 in the thickness direction D1 and on an outer side of the second glass pane 2.

Note that the components of the glass panel unit 100 and the steps for manufacturing the glass panel unit 100 may be accordingly modified in design.

For example, in the manufacturing method (M), the plurality of spacers 43 are disposed on the second glass pane 2 in the spacer arrangement step, but the plurality of spacers 43 may be disposed on at least one of the first glass pane 1 or the second glass pane 2. That is, the plurality of spacers 43 may be disposed on the first glass pane 1, or the plurality of spacers 43 may be assigned to and disposed on the first glass pane 1 and the second glass pane 2.

Moreover, in the manufacturing method (M), the gas adsorbent 44 is disposed on the second glass pane 2 in the gas adsorbent disposition step, but the gas adsorbent 44 may be disposed at least one of the first glass pane 1 or the second glass pane 2. That is, the gas adsorbent 44 may be disposed on the first glass pane 1, or the gas adsorbent 44 may be disposed on both the first glass pane 1 and the second glass pane 2. The glass panel unit 100 may include two or more gas adsorbents 44. In this case, the glass panel unit 100 further includes two or more thermal insulation layers 48. Also in such a glass panel unit 100, the thermal insulation layer 48 and the gas adsorbent 44 are in contact with each other, and the gas adsorbent 44 is located closer to the vacuum space 52 than the thermal insulation layer 48 is.

The glass panel unit 100 manufactured by the manufacturing method (M) has excellent thermal insulation properties and is easily handled. Thus, the glass panel unit 100 is suitably used for a windowpane and the like. Moreover, the glass panel unit 100 manufactured by the manufacturing method (M) may be disposed on, for example, a door of a refrigerator or a freezer. This enables, for example, the state of the interior of the refrigerator or the freezer to be checked by taking advantage of the high thermal insulation properties of the glass panel unit 100 without inhibiting the function of the refrigerator or the freezer. As this example, domestic or business application of the glass panel unit can be expected.

### (Summary)

As described above, a first aspect is a glass panel unit (100) including a first glass pane (1), a second glass pane (2), a frame (41), a vacuum space (52), a gas adsorbent (44), and a thermal insulation layer (48). The second glass pane (2) is disposed to face the first glass pane (1). The frame (41) is disposed between the first glass pane (1) and the second glass pane (2) and hermetically bonds a first peripheral portion (13) of the first glass panel (1) and a second peripheral portion (23) of the second glass pane (2) together. The first peripheral portion (13) extends along an outer periphery of the first glass pane (1). The second peripheral portion (23) extends along an outer periphery of the second glass pane (2). The vacuum space (52) is surrounded by the first glass pane (1), the second glass pane (2), and the frame (41). The gas adsorbent (44) is disposed in the vacuum space (52). The thermal insulation layer (48) is disposed between the gas adsorbent (44) and the second glass pane (2).

The first aspect facilitates the activation of the gas adsorbent (44), and reduces the occurrence of damage on the glass panel unit(100), specifically, the second glass pane (2) when the gas adsorbent (44) is activated.

In a glass panel unit (100) of a second aspect referring to the first aspect, the second glass pane (2) has a recess (2a). The recess (2a) is part of a surface (22) of the second glass pane (2). The surface (22) faces the vacuum space (52). The recess (2a) is recessed in a direction opposite to the first glass pane (1). The recess (2a) is located in the vacuum space (52). a gas adsorbent (44) and a thermal insulation layer (48) are disposed in the recess (2a).

The second aspect facilitates the activation of the gas adsorbent (44) and reduces the occurrence of damage on the glass panel unit (100) when the gas adsorbent (44) is activated.

In a glass panel unit (100) of a third aspect referring to the first or second aspect, the gas adsorbent (44) contains a metal getter material.

According to the third aspect, activation of the gas adsorbent (44) enables the gas adsorbent (44) to adsorb gas in the vacuum space (52), the quality of the vacuum space (52) is less likely to be reduced, and thus, the thermal insulation properties of the glass panel unit (100) are less likely to be degraded.

In a glass panel unit (100) of a fourth aspect referring to any one of the first to third aspects, the thermal insulation layer (48) includes at least one selected from the group consisting of a hollow silica particle, a ceramics particle, and a ceramics plate.

The fourth aspect facilitates the activation of the gas adsorbent (44) and reduces the occurrence of damage on the glass panel unit (100) when the gas adsorbent (44) is activated.

A fifth aspect is a method for manufacturing a glass panel unit (100), and the method includes a preparation step, a melting step, an evacuation step, and an activation step. The preparation step includes preparing an assembled product (81). The assembled product (81) includes a first glass pane (1), a second glass pane (2), a bonding material (410) having a frame shape, an internal space (510), a gas adsorbent (44), and a thermal insulation layer (48). The second glass pane (2) is disposed to face the first glass pane (1). the bonding material (410) having the frame shape is disposed between a first peripheral portion (13) of the first glass pane (1) and a second peripheral portion (23) of the second glass pane (2). The first peripheral portion (13) extends along an outer periphery of the first glass pane (1). The second peripheral portion (23) extends along an outer periphery of the second glass pane (2). The internal space (510) is surrounded by the first glass pane (1), the second glass pane (2), the bonding material (410) having the frame shape. The gas adsorbent (44) is disposed in the internal space (510). The thermal insulation layer (48) is disposed between the gas adsorbent (44) and the second glass pane (2). The melting step is a step of melting the bonding material (410) having the frame shape to hermetically bond the first glass pane (1) and the second glass pane (2) together. The evacuation step is a step of evacuating the internal space (510) via an evacuation port (50) to create a vacuum space (52). The evacuation port (50) is communicated with the internal space (510). The activation step is a step of activating the gas adsorbent (44) by locally heating the gas adsorbent (44).

The fifth aspect facilitates the activation of the gas adsorbent (44), and reduces the occurrence of damage on the glass panel unit(100), specifically, the second glass pane (2) when the gas adsorbent (44) is activated.

In a method of a sixth aspect referring to the fifth aspect for manufacturing the glass panel unit (100) the second glass pane (2) has a recess (2a). The recess (2a) is part of a surface (22) of the second glass pane (2). The surface (22) faces the internal space (510). The recess (2a) is recessed in a direction opposite to the first glass pane (1). The recess (2a) is disposed in the internal space (510). The gas adsorbent (44) and a thermal insulation layer (48) are disposed in the recess (2a).

The sixth aspect facilitates the activation of the gas adsorbent (44) and reduces the occurrence of damage on the glass panel unit (100) when the gas adsorbent (44) is activated.

In a method of a seventh aspect referring to the fifth or sixth aspect for manufacturing the glass panel unit (100) the gas adsorbent (44) is locally heated through the first glass pane (1).

According to the seventh aspect, the gas adsorbent (44) is locally heated without letting heat pass through the thermal insulation layer (48), and therefore, a heat time of the gas adsorbent (44) is reduced, and thereby, the work efficiency for activating the gas adsorbent (44) is improved.

### Reference Signs List

- 100: GLASS PANEL UNIT
- 1: FIRST GLASS PANE
- 13: FIRST PERIPHERAL PORTION
- 2: SECOND GLASS PANE
- 23: SECOND PERIPHERAL PORTION
- 2A: RECESS
- 41: FRAME
- 410: BONDING MATERIAL HAVING FRAME SHAPE
- 44: GAS ADSORBENT
- 48: THERMAL INSULATION LAYER
- 52: VACUUM SPACE
- 510: INTERNAL SPACE
- 81: ASSEMBLED PRODUCT

## Claims

1. A glass panel unit, comprising:
a first glass pane;
a second glass pane disposed to face the first glass pane;
a frame disposed between the first glass pane and the second glass pane and hermetically bonding a first peripheral portion of the first glass pane and a second peripheral portion of the second glass pane together, the first peripheral portion extending along an outer periphery of the first glass pane, the second peripheral portion extending along an outer periphery of the second glass pane;
a vacuum space surrounded by the first glass pane, the second glass pane, and the frame;
a gas adsorbent disposed in the vacuum space; and
a thermal insulation layer disposed between the gas adsorbent and the second glass pane.

2. The glass panel unit of claim 1, wherein
the second glass pane has a recess, the recess is part of a surface of the second glass pane, the surface faces the vacuum space, the recess is recessed in a direction opposite to the first glass pane, and the recess is located in the vacuum space, and
the gas adsorbent and the thermal insulation layer are disposed in the recess.

3. The glass panel unit of claim 1 or 2, wherein
the gas adsorbent contains a metal getter material.

4. The glass panel unit of any one of claims 1 to 3, wherein
the thermal insulation layer includes at least one selected from the group consisting of a hollow silica particle, a ceramics particle, and a ceramics plate.

5. A method for manufacturing a glass panel unit, the method comprising:
a preparation step of preparing an assembled product including
a first glass pane,
a second glass pane disposed to face the first glass pane,
a bonding material having a frame shape and disposed between a first peripheral portion of the first glass pane and a second peripheral portion of the second glass pane, the first peripheral portion extending along an outer periphery of the first glass pane, the second peripheral portion extending along an outer periphery of the second glass pane,
an internal space surrounded by the first glass pane, the second glass pane, and the bonding material having the frame shape,
a gas adsorbent disposed in the internal space,
a thermal insulation layer disposed between the gas adsorbent and the second glass pane,
a melting step of melting the bonding material having the frame shape to hermetically bond the first glass pane and the second glass pane together;
an evacuation step of evacuating the internal space via an evacuation port to create a vacuum space, the evacuation port being communicated with the internal space; and
an activation step of activating the gas adsorbent by locally heating the gas adsorbent.

6. The method of claim 5, wherein
the second glass pane has a recess, the recess is part of a surface of the second glass pane, the surface faces the internal space, the recess is recessed in a direction opposite to the first glass pane, the recess is disposed in the internal space, and
the gas adsorbent and the thermal insulation layer are disposed in the recess.

7. The method of claim 5 or 6, wherein
the gas adsorbent is locally heated through the first glass pane.
